# EUROPEAN PATENT APPLICATION

(11) **EP 3 499 843 A1**
(43) Date of publication of application: **19.06.2019**
(21) Application number: 17306782.8
(22) Date of filing: 15.12.2017
(51) Int. Cl.: H04L 29/08, G06F 11/34

(54) **DEVICES, SYSTEMS, AND METHODS FOR DETECTING USAGE OF APPLICATIONS ON A DEVICE**

(71) Applicant: THOMSON LICENSING, 92130 Issy les Moulineaux (FR)
(72) Inventor: CHANDRASHEKAR, Jaideep, Los Altos, California 94022 (US); DRUGEON-HAMON, David, 35576 Cesson-Sévigné (FR); DAUVIN, Laurent, 35576 Cesson-Sévigné (FR); JOLLIVET, Christophe, 35576 Cesson-Sévigné (FR)
(74) Representative: Vidon Brevets & Stratégie

(57) **Abstract**

The present disclosure provides devices (100, 202), systems (200) and methods (400) for detecting a usage of at least one application (206) on a device (100, 202). In one aspect of the present disclosure, a device (100, 202) is provided including an accessibility event monitor (204) and a user profile module (208). The accessibility event monitor (204) monitors (402) an accessibility application programming interface (API) (210) on an operating system of the device (100, 202) to detect (404) at least one accessibility event (216) indicating a use of an application (206). The user profile module (208) develops (406) a profile for a user based on the detected (404) at least one accessibility event (216).

## Description

### TECHNICAL FIELD

The present disclosure generally relates to computing devices. More particularly, the present disclosure is related to devices, systems and methods for detecting a usage of at least one application on a computing device.

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Usage of computing devices (e.g., smart phones, smart televisions, tablets, laptops, desktops, wearable devices, set-top boxes, multimedia players, gaming consoles, etc.) increases with every year. A wide variety of applications exist that increase the functionality of these computing devices, such as, media consumption applications, social networking applications, communication applications, gaming applications, productivity/utility applications, etc. The nature of each individual's usage of the wide variety of applications available today varies greatly from individual to individual, since different users have differing tendencies, interests, and use-cases when it comes to their computing devices and the applications they use. The varying nature of each individual's usage of the applications on their computing devices makes it very difficult to predict or track which applications on a computing device an individual is using and how the individual is using each application.

Information related to each individual's usage of the applications on their computing device(s) is very valuable for application developers, computing device manufacturers, advertisers, and many other interested parties. Therefore, a need exists for better techniques in tracking each individual's usage of the applications on their computing device(s).

### SUMMARY

In one aspect of the present disclosure, a method is provided including monitoring an accessibility application programming interface (API); detecting at least one accessibility event indicating a use of at least one application; and developing a profile for a user based on the detected at least one accessibility event.

In another aspect of the present disclosure, a device is provided including an accessibility event monitor configured to monitor an accessibility application programming interface and detect at least one accessibility event indicating a use of at least one application; and a user profile module configured to develop a profile for a user based on the detected at least one accessibility event.

In accordance with an aspect of the present principles, an embodiment of a method comprises: monitoring an accessibility application programming interface (API); detecting at least one accessibility event indicating a use of at least one application; and developing a profile for a user based on the detected at least one accessibility event.

In accordance with another aspect, an embodiment of a method as described herein may include detecting at least one state transition associated with a change from a first state of a user interface of a device to a second state of the user interface of the device.

In accordance with another aspect, an embodiment of a method including a first and/or second state as described herein may further include the first and/or second state being at least one of an idle state, an application start state, an application stop state, and/or a current application stop/new application start state.

In accordance with another aspect, an embodiment of a method as described herein may further comprise determining at least one characteristic of a user's behavior based on the developed profile.

In accordance with another aspect, an embodiment of a method as described herein may further comprise performing at least one action based on the determined at least one characteristic of the user's behavior.

In accordance with another aspect, an embodiment of a method as described herein may include the use of the at least one application being a launching or halting of the at least one application.

In accordance with another aspect, an embodiment of a method as described herein may include the use of the at least one application being a launching of the at least one application directly from a second application.

In accordance with another aspect, an embodiment of a method as described herein may further comprise determining a time associated with the launching or halting of the at least one application.

In accordance with another aspect, an embodiment of a method as described herein may further comprise storing at least one system property at the time of the use of the at least one application in the developed profile.

In accordance with another aspect, an embodiment of a method as described herein may be performed on at least one of a smart phone, a smart television, a laptop, a desktop, a gateway, and a set-top box.

In accordance with an aspect of the present principles, an exemplary embodiment of a device may comprise: an accessibility event monitor configured to monitor an accessibility application programming interface (API) and detect at least one accessibility event indicating a use of at least one application; and a user profile module configured to develop a profile for a user based on the detected at least one accessibility event.

In accordance with another aspect, an embodiment of a device as described herein may include the accessibility event monitor being configured to detect at least one state transition associated with a change from a first state of a user interface of the device to a second state of the user interface of the device.

In accordance with an aspect of the present principles, an embodiment of a device as described herein may comprise the first state and the second state including at least one of an idle state, an application start state, an application stop state, and/or a current application stop/new application start state.

In accordance with an aspect of the present principles, an embodiment of a device as described herein may comprise the user profile module being configured to determine at least one characteristic of a user's behavior based on the developed profile.

In accordance with an aspect of the present principles, an embodiment of a device as described herein may comprise the user profile module being configured to perform the at least one action based on the determined at least one characteristic of the user's behavior.

In accordance with an aspect of the present principles, an embodiment of a device as described herein may comprise the use of the at least one application being a launching or halting of the at least one application.

In accordance with an aspect of the present principles, an embodiment of a device as described herein may comprise the use of the at least one application being a launching of the at least one application directly from a second application.

In accordance with an aspect of the present principles, an embodiment of a device as described herein may comprise the user profile module being configured to determine a time associated with the launching or halting of the at least one application.

In accordance with an aspect of the present principles, an embodiment of a device as described herein may comprise the user profile module being configured to store at least one system property at the time of the use of the at least one application in the developed profile.

In accordance with an aspect of the present principles, an embodiment of a device as described herein may comprise the device being at least one of a smart phone, a smart television, a laptop, a desktop, a gateway, and a set-top box.

### BRIEF DESCRIPTION OF THE DRAWINGS

These, and other aspects, features and advantages of the present disclosure will be described or become apparent from the following detailed description of the preferred embodiments, which is to be read in connection with the accompanying drawings wherein like-numbered features indicate the same or similar features and wherein:
FIG. 1 is a block diagram of an exemplary receiving device in accordance with an embodiment of the present disclosure;
FIG. 2 is a block diagram of an exemplary system including a computing device in accordance with an embodiment of the present disclosure;
FIG. 3 is a state transition flow of a state machine in accordance with an embodiment of the present disclosure; and
FIG. 4 is flow chart of a method for determining a use of an application on a device in accordance with an embodiment of the present disclosure.

It should be understood that the drawing(s) are for purposes of illustrating the concepts of the disclosure and is not necessarily the only possible configuration for illustrating the disclosure.

### DETAILED DESCRIPTION

It also should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The present disclosure provides devices, systems, and methods for monitoring a user's usage of one or more applications on a computing device (hereinafter, a "device"). The devices, systems, and methods of the present disclosure monitor the accessibility services of the operating system of a device to determine which applications on the device have been launched or halted, i.e. started or stopped. Based on the monitored launching or halting of each application on the device, a user profile is developed that includes information related to the user's usage of the applications on the device.

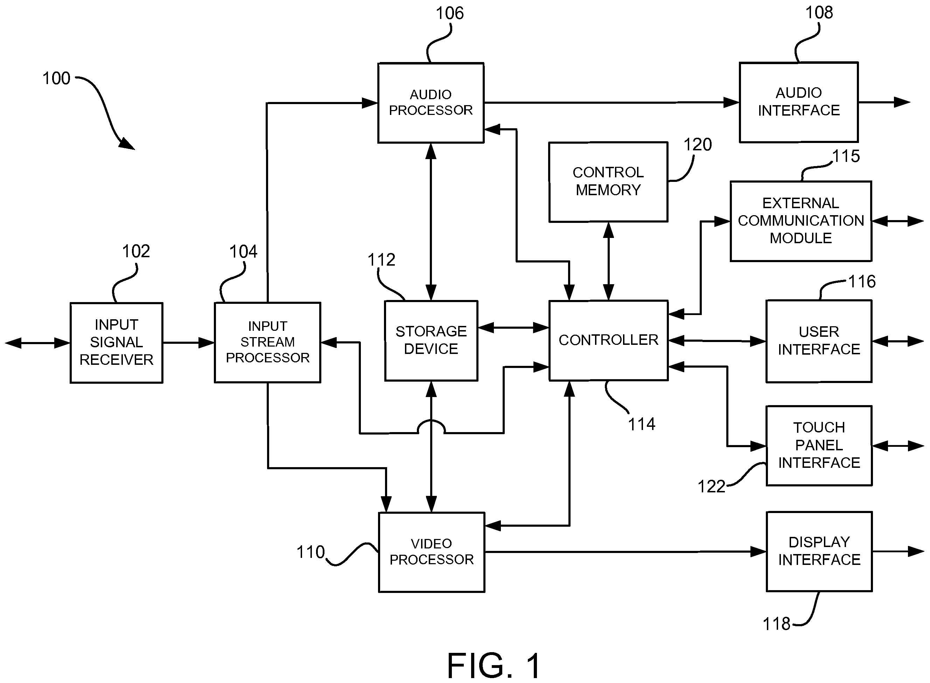

Referring to FIG. 1, a block diagram of an embodiment of a receiving device 100 is shown in accordance with the present disclosure. Receiving device 100 may be included as part of a gateway device, modem, set-top box, or other similar communications device. The device 100 shown may also be incorporated into other systems including an audio device or a display device, e.g., a smart television, a mobile phone, a tablet, a laptop computing device, a desktop computing device, etc. In either case, several components necessary for complete operation of the system are not shown in the interest of conciseness.

In the device 100 shown in FIG. 1, content is received by an input signal receiver 102 via one or more content sources. The input signal receiver 102 may be one of several known receiver circuits used for receiving, demodulation, and decoding signals provided over one of several possible networks including over the air, cable, satellite, cellular, Ethernet, fiber and phone line networks. The desired input signal may be selected and retrieved by the input signal receiver 102 based on user input provided through a control interface or touch panel interface 122. Touch panel interface 122 may include an interface for a touch screen device. Touch panel interface 122 may also be adapted to interface to a cellular phone, a tablet, a mouse, a high end remote or the like.

The decoded output signal is provided to an input stream processor 104. The input stream processor 104 performs the final signal selection and processing, and includes separation of video content from audio content for the content stream. The audio content is provided to an audio processor 106 for conversion from the received format, such as compressed digital signal, to an analog waveform signal. The analog waveform signal is provided to an audio interface 108 and further to a display device or audio amplifier. Alternatively, the audio interface 108 may provide a digital signal to an audio output device or display device using a High-Definition Multimedia Interface (HDMI) cable or alternate audio interface such as via a Sony/Philips Digital Interconnect Format (SPDIF). The audio interface may also include amplifiers for driving one more sets of speakers. The audio processor 106 also performs any necessary conversion for the storage of the audio signals.

The video output from the input stream processor 104 is provided to a video processor 110. The video signal may be one of several formats. The video processor 110 provides, as necessary, a conversion of the video content, based on the input signal format. The video processor 110 also performs any necessary conversion for the storage of the video signals.

A storage device 112 stores audio and video content received at the input. The storage device 112 allows later retrieval and playback of the content under the control of a controller 114 and also based on commands, e.g., navigation instructions such as fast-forward (FF) and rewind (Rew), received from a user interface 116 and/or touch panel interface 122. The storage device 112 may be a hard disk drive, one or more large capacity integrated electronic memories, such as static RAM (SRAM), or dynamic RAM (DRAM), or may be an interchangeable optical disk storage system such as a compact disk (CD) drive or digital video disk (DVD) drive.

The converted video signal, from the video processor 110, either originating from the input or from the storage device 112, is provided to a display interface 118. The display interface 118 further provides the display signal to a display device, e.g., a television, a monitor, a tablet, a touch screen of a mobile device, etc. The display interface 118 may be an analog signal interface such as red-green-blue (RGB) or may be a digital interface such as HDMI. It is to be appreciated that the display interface 118 will generate the various screens for presenting the search results in a three-dimensional grid as will be described in more detail below.

The controller 114 is interconnected via a bus to several of the components of the device 100, including the input stream processor 102, audio processor 106, video processor 110, storage device 112, external communication module 115, and a user interface 116. The controller 114 manages the conversion process for converting the input stream signal into a signal for storage on the storage device or for display. The controller 114 also manages the retrieval and playback of stored content. Furthermore, controller 114 performs searching of content and the creation and adjusting of the grid display representing the content, either stored or to be delivered via one or more content sources or delivery networks.

The controller 114 is further coupled to control memory 120 (e.g., volatile or non-volatile memory, including RAM, SRAM, DRAM, ROM, programmable ROM (PROM), flash memory, electronically programmable ROM (EPROM), electronically erasable programmable ROM (EEPROM), etc.) for storing information and instruction code for controller 114. Control memory 120 may store instructions for controller 114. Control memory 120 may also store a database of elements, such as graphic elements containing content. The database may be stored as a pattern of graphic elements. Alternatively, the memory may store the graphic elements in identified or grouped memory locations and use an access or location table to identify the memory locations for the various portions of information related to the graphic elements. Further, the implementation of the control memory 120 may include several possible embodiments, such as a single memory device or, alternatively, more than one memory circuit communicatively connected or coupled together to form a shared or common memory. Still further, the memory may be included with other circuitry, such as portions of bus communications circuitry, in a larger circuit.

The user interface 116 may also include an interface for a microphone. The interface may be a wired or wireless interface, allowing for the reception of the audio signal for use in one embodiment.

Device 100 also includes an external communication module 115. External communication module 115 is controllable by controller 114 and configured for communication with one or more devices over one or more communication networks. Communication module 115 may be configured to send and receive communication signals via hardwired or wireless communication protocols.

In one embodiment, controller 114 is configured to execute instructions (stored in memory 120) corresponding to an operating system and a plurality of applications. For example, the operating system may be any one of a Windows™ operating system, an iOS™ operating system, an Android™ operating system, a Linux™ operating system, and/or a Unix™ operating system. One or more applications (e.g., Netflix™, YouTube™, Hulu™, etc.) may be executed by controller 214 on top of the operating system layer. The operating systems and applications executed and provided by controller 114 may be navigated and/or controlled by a user via any of interfaces 116, 122. As will be described below, in one embodiment, controller 114 is configured to monitor a user's usage of one or more applications being executed by controller 114 using accessibility services of the operating system of device 100 to determine which applications on the device have been launched or halted. Based on the monitored launching or halting of each application executed by controller 114, a user profile is developed that includes information related to the user's usage of the applications on the device. The user profile may be stored in a memory of device 100, such as memory 120, and/or be provided to a database external to device 100 via external communication module 115.

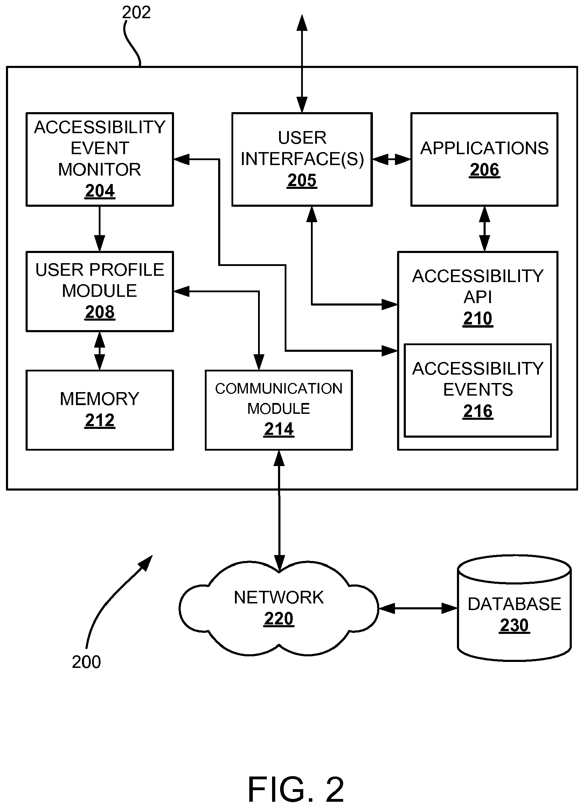

Referring to FIG. 2, a system 200 is shown in accordance with the present disclosure. System 200 includes a device 202 and a database 230 communicatively coupled to device 202 via a network 220. It is to be appreciated that device 202 may be any type of computing device capable of reading computer-executable instructions. For example, device 202 may be any one of a laptop, desktop, smart phone, smart television, tablet, wearable device (e.g., smart watch, smart glasses, etc.), set-top box, gateway, gaming console, multimedia player, etc. In some embodiments, device 202 is an Over-the-Top (OTT) box (e.g., Apple™ TV, Android™ TV, Roku™, etc.) configured to receive streaming multimedia content via the Internet. In a further embodiment, device 202 is configured similar to device 100, where the components or module of device 202 described below are implemented by at least controller 114.

Network 220 may be any wired or wireless communication network configured to facilitate communication between a plurality of devices and/or servers, such as device 202 and database 230. For example, network 220 may be any one of an intranet, a Wide Area Network (WAN), a Local Area Network (LAN), a Personal Area Network (PAN), the Internet, a Power Line Communications (PLC) network, and/or a cellular network (e.g., a Global System for Mobile Communications (GSM) network).

Device 202 includes accessibility event monitor 204, user interface(s) 205, applications 206, user profile module 208, accessibility Application Programming Interface (API) 210, memory 212, and communication module 214. As will be described below, accessibility API 210 is configured to generate one or more accessibility events 216. It is to be appreciated that device 202 may include additional components/modules not shown in FIG. 2.

Device 202 is configured to execute or run an operating system, such as, an Android™ operating system, a Windows™ operating system, an iOS™ operating system, a Linux™ operating system, a Unix™ operating system, etc. One or more applications 206 may be executed on top of the operating system of device 202. The applications 206 and operating system of device 202 are navigated and interacted with via user inputs (e.g., mouse clicks, button presses, remote control signals, touch inputs, etc.) received by one or more user interfaces 205 of device 202. It is to be appreciated that user interfaces 205 may represent one or more graphical interfaces of the operating system and applications 206 that are displayed by device 202 to a user. For example, interfaces 205 may include graphical interfaces for a home screen and/or desktop environment of the operating system of device 202. Interfaces 205 may also include dedicated graphical interfaces for each application 206.

The operating system of device 202 provides for accessibility services that provide enhancements to user interface(s) 205 to enable users with disabilities, such as, visual impairment, hearing impairment, or other impairments to navigate and interact with the operating system and applications 206 of device 202 via user interfaces 205. The accessibility services are executed by a controller or processing device of device 202 in the background of the operating system. The user interfaces 205 and applications 206 of device 202 access the accessibility services via accessibility API 210.

In providing enhancements to user interfaces 205, the accessibility services of the operating system of device 202 monitor the user interfaces 205 for changes (e.g., selections within the user interfaces 205, appearance of pop-up windows or dialogue boxes within the user interfaces 205, etc.) In response to any detected changes by the accessibility services, one or more accessibility events or messages 216 indicative of the changes within the user interfaces 205 are generated by the accessibility services. The accessibility events 216 include information related to changes in the user interfaces 205 of operating system and applications 206. For example, some of the accessibility events 216 of device 202 indicate a change in the current top-running or active application 206 (e.g., the application 206 currently being used by the user on device 202).

Accessibility event monitor 204 is configured to monitor accessibility API 210 for certain accessibility events 216 associated with changes in the user interfaces 205 of one or more applications 206 on device 202. Based on the detected accessibility events 216, accessibility event monitor 204 is configured to determine which applications 206 of device 202 have been started/launched and/or stopped/halted. The determination of which applications 206 have been launched or halted is then sent by accessibility event monitor 204 to user profile module 208. As will be described in greater detail below, based on the determinations of accessibility event monitor 204, user profile module 208 is configured to develop a profile for the user including information related to the user's use of the applications 206 on device 202 (e.g., which applications 206 have been launched, a time the applications have been launched, etc.) The developed or generated profile may then be stored in a memory 212 and/or provided to a database 230 via communication module 214.

In one embodiment, accessibility event monitor 206 is configured to generate and maintain a finite state machine representative of different states of user interface(s) 205. Based on certain accessibility events 216 detected by accessibility event monitor 204, accessibility event monitor 204 is configured to detect or determine state transitions associated with the starting/launching and stopping/halting of the applications 206 within interface 206 on device 202. It is to be appreciated that the accessibility events 216 monitored and detected by accessibility event monitor 204 may include information (e.g., a package name) indicative of the particular application 206 that a change is occurring with respect to. In this way, accessibility event monitor 204 is configured to determine which application 206 on device 202 has been launched or halted.

For example, in one embodiment, where the operating system of device 202 is an Android™ operating system, accessibility event monitor 204 is configured to detect the accessibility event 216 "TYPE_WINDOW_STATE_CHANGED", which is associated with a state change of an interface 205 of device 202. The "TYPE_WINDOW_STATE_CHANGED" accessibility event 216 includes information associated with the source of the accessibility event 216 (e.g., the application 206 that a state change occurred with respect to). It is to be appreciated that the above-included accessibility event 216 is merely exemplary and that other accessibility events 216 (associated with the Android™ operating system or any other operating system used with device 202) may be monitored by accessibility event monitor 204 to determine the usage of a user of the applications 206 on device 202.

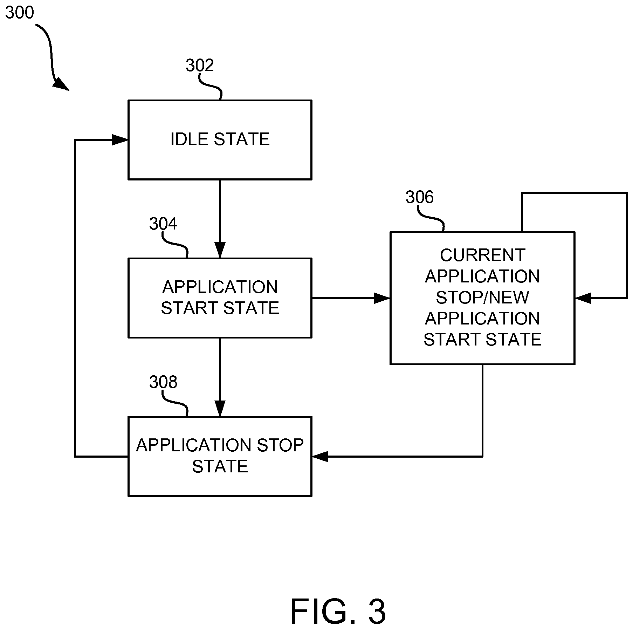

Referring to FIG. 3, a state transition flow of a state machine 300 generated and maintained by accessibility event monitor 204 is shown in accordance with the present disclosure. The state machine 300 includes several possible states that one or more of the user interfaces 205 of device 202 may be in, each of which will be described below. Accessibility event monitor 204 is configured to detect certain accessibility events 204 associated with a state change with respect to an application 206 (e.g., a launching or halting of an application 206) of device 202. Based on the detected accessibility events 216, accessibility event monitor 204 is configured to determine state transitions of state machine 300 to determine which applications 206 have been launched or halted on device 202.

For example, after device 202 has been powered on, user interface 205 of device 202 is in an idle state 302. The idle state 302 may correspond to a home screen in operating systems, such as, in Android™ and iOS™ operating systems, or a desktop environment in operating systems, such as, in Windows™ and Linux™ operating systems. When a user input is received by user interface 205 causing an application 206 (e.g., a YouTube™ application) to be started or launched, an accessibility event 216 associated with an application start state 304 is generated by the accessibility service and detected by accessibility event monitor 204. From the application start state 304, if a user input is received by user interfaces 205 causing the application 206 to be stopped or halted, an accessibility event 216 associated with an application stop state 308 is detected by accessibility event monitor 204, and the user interface 205 of the device 202 returns to an idle state 302.

It is to be appreciated that in some embodiments, accessibility event monitor 204 is configured to assume that when an accessibility event 216 associated with an application stop state 308 is detected, the user interface 205 of the device 202 always returns to an idle state 302. In this embodiment, accessibility event monitor 204 does not depend on the detection of an accessibility event 216 associated with an idle state 302 to determine that the user interface 205 of the device 202 is in an idle state 302. In other embodiments, accessibility event monitor 204 is configured to determine that a detected accessibility event 216 is associated with an idle state 302 by checking the source information in the accessibility event 216. If the source information is associated with a home screen or desktop environment application 206 of the operating system, accessibility event monitor 204 is configured to determine that the user interface 205 is in an idle state 302. For example, where the operating system of device 202 is an Android™ operating system, the "Leanback" application (provided by the Android™ operating system) is associated with the home screen (i.e., the idle state 302 in state machine 300). In this example, upon detecting an accessibility event 216 "AccessibilityEvent.TYPE_WINDOW_CONTENT_CHANGED" including a package name "com.google.android.leanbackLauncher", accessibility event monitor 204 is configured to determine that a state transition from the application stop state 308 to the idle state 302 has occurred.

Alternatively, from the application start state 304, if a user input is received by user interface 205 causing a first application 206 (e.g., the YouTube™ application, currently being used by the user) to transition directly to the launching of a second application 206 (e.g., a Netflix™ application), an accessibility event 216 associated with a current application stop/new application start state 306 is detected by accessibility event monitor 204. It is to be appreciated that the user input causing a direct transition from a launching of a first, currently used, application to a launching of a second application may be the pressing of an application specific button (e.g., a dedicated Netflix™ button) on device 202 or a remote control configured to control device 202 to cause the second application 206 to be launched. The user input may also be a "recent apps" button of user interface 205, such as found in Android™ operating systems, enabling a user to launch any previously launched applications 206 directly from a currently used application 206.

From the application stop/start state 306, if user input is received by user interface 205 causing the second application 206 (e.g., the Netflix™ application, currently used) to transition directly to the launching of a third application 206 (e.g., the YouTube™ application or a different application), an accessibility event 216 associated with a current application stop/new application start state 306 is detected again by accessibility event monitor 204. In this case, the state transition of the state machine 300 is from the current application stop/new application start state 306 associated with the direct transition of the first application to the second application, to the current application stop/new application start state 306 associated with the direct transition of the second application to the third application. Alternatively, from the application stop/start state 306, if a user input is received by user interface 205 causing the current application being used to be stopped or halted, an accessibility event 216 associated with the application stop state 308 is detected by accessibility event monitor 204, and the device 202 returns to the idle state 302.

In the manner described above, based on detected accessibility events 216, accessibility event monitor 204 is configured to detect or determine state transitions between states 302, 304, 306, and 308. Based on a transition from a first state of user interface 205 to a second state of user interface 205 and a package or application name associated with the detected accessibility event 216, accessibility event monitor 204 is configured to determine a use of at least one application 206 by a user of device 202. For example, based on a state transition from the idle state 302 to the application start state 304 and a package or application name of a first application associate with the detected accessibility event 216, accessibility event monitor 204 is configured to determine the first application 206 has been launched by a user. Based on a state transition from the application start state 304 to the application stop state 308 and a package or application name of the first application associate with the detected accessibility event 216, accessibility event monitor 204 is configured to determine the first application 206 has been halted by the user. Alternatively, based on a state transition from the application start state 304 to the current application stop state/new application start state 306 and a package or application name of a second application associate with the detected accessibility event 216, accessibility event monitor 204 is configured to determine that the user launched the second application directly from the first application.

The determined or detected user's use of each application 206 is sent by accessibility event monitor 204 to user profile module 208, where user profile module 208 is configured to develop a user profile for the user based on the detected user's use of the applications 206 on device 202 and other system information associated with device 202. In one embodiment, in developing the user's profile, when the user profile module 208 receives a detected user's use of an application 206 (e.g., a launching or halting of the application 206), the user profile module 208 is configured to determine the time and date (based on the system clock and calendar of the operating system of device 202) that the use occurred. In this way, the user profile developed by user profile module 208 includes the name of the application 206 launched or halted, the user's use of the application 206 (e.g., whether the application was launched or halted), and the time that the application 206 was launched or halted.

In some embodiments, in building the user profile, when user profile module 208 receives a determined or detected use from accessibility event monitor 204, user profile module 208 is configured to determine additional system properties (e.g., other than the current system time and date) of device 202 at the time of receiving the detected or determined use. These additional system properties are added by user profile module 208 to the user profile in association with the detected use. For example, the user profile module 208 may determine the current volume, brightness, location, and/or battery settings of device 202 when the determined use of an application 206 is received from accessibility event monitor 204. All of the information associated with the user's use of the application 206 (e.g., whether the application was launched, or halted, which application was launched or halted, and any system properties at the time the application was launched or halted, such as the current time and date, device volume level, device location, etc.) is compiled by user profile module 208 and stored in a memory 212 or sent via communication module 214 and network 220 to a database 230 to be stored.

The user's use with respect to the applications 206 of device 202 (including any relevant system properties at the time of the user's use) is determined as described above using accessibility event monitor 204 and user profile module 208 over a period of time to accumulate and develop a rich data set of information associated with the user's use of the application 206 on device 202 that is stored in the user's profile. Based on the usage information in the user's profile stored in memory 212 or database 230, user profile module 208 may perform post processing to determine additional information with respect to the user's use of applications 206. For example, based on the time an application was launched and the time the application was halted, the user profile module 208 is configured to determine the total time the application 206 was used by the user.

In some embodiments, the information in the user profile is further used by user profile module 208 to determine further statistical information and/or correlations associated with one or more characteristics of a user's behavior with respect the user's usage of the application 206 on device 202. For example, using the information in the user's profile, user profile module 208 is configured to determine the average time the user spends using each application 206, the time of day the user typically uses certain applications 206, etc. The user profile module 208 is further configured to determine characteristics of a user's behavior related to common transitions patters in the user's usage of applications 206 based on the information in the user's profile. For example, the user profile module 208 may be configured to determine, based on the information in the user's profile, that after a user launches a first application 206 (e.g., an alarm clock application), the user is likely to launch a second application 206 (e.g., a weather application). As another example, the user profile module 208 may be configured to determine that when the user is in a specific location, the user is likely to launch a specific application 206.

The characteristics of the user's behavior determined by user profile module 208 may be saved in the user's profile (which may be stored in memory 212) and used by user profile module 208 to automatically perform certain actions (e.g., by providing one or more control signal to one or more modules and/or processors of device 202) in anticipation of a user's predicted behavior. For example, where the characteristic of the user behavior is that the user is likely to launch a second application after a first application has been launched and halted, the user profile module 208 is configured to automatically prompt the user via user interface 205 to launch the second application after the first application has been launched and halted. It is to be appreciated that the launching and halting of the first application is determined by accessibility event monitor 204 and user profile module 208 in the manner described above. Alternatively, the user profile module 208 may automatically launch the second application after the first application has been launched and halted. It is to be appreciated that the above-described examples are merely exemplary and that any number of actions may be automatically performed by user profile module 208 or another processing device based on the determined characteristics of the user's behavior.

In another embodiment, the user's profile may be stored in database 230 and includes information related to a user's usage and behavioral characteristics for a plurality of the user's devices 202. In this embodiment, each user device 202 includes the modules shown in FIG. 2 and sends user profile information to database 230 to be compiled into one user profile encompassing the user's usage of application across all of the user's devices 202.

It is to be appreciated that modules 204, 205, 206, 208, 210, 216 may be implemented in hardware, software, firmware, or any combinations thereof. In some embodiments, the modules 204, 205, 206, 208, 210, 216 may be implemented in software or firmware that is stored on a memory device of device 202, such as memory 212, and that are executable by a suitable instruction execution system (e.g., a processing device) of device 202. In some embodiments, the various modules 204, 205, 206, 208, 210, 216 may be implemented in hardware using, for example, discrete logic circuitry, an application specific integrated circuit (ASIC), a programmable gate array (PGA), a field programmable gate array (FPGA), or any combinations thereof.

It is to be appreciated that modules 204, 205, 206, 208, 210, 216 may be implemented by any user device including an operating system having accessibility services. For example, modules 204, 205, 206, 208, 210, 216 may be included in a device such as device 100. The modules may be stored in memory 120 and/or another memory coupled to controller 114 and executed by controller 114.

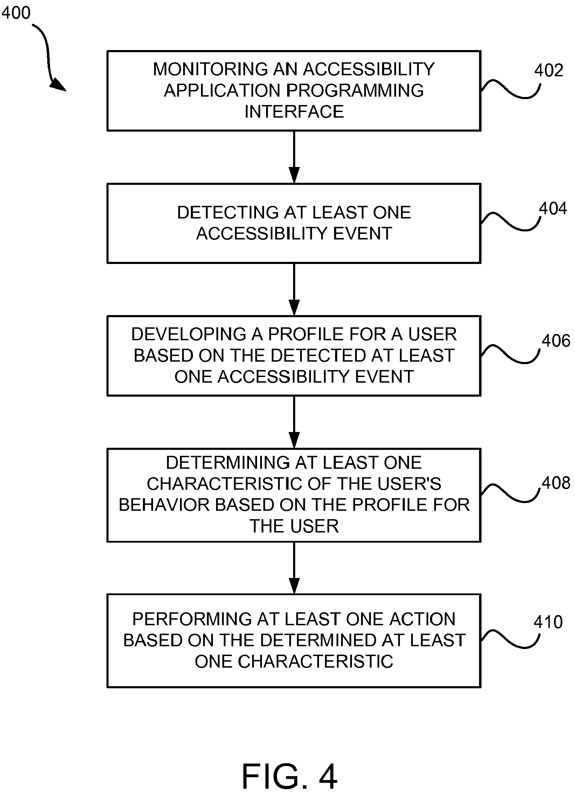

Referring to FIG. 4, a method 400 for determining a use of an application in a device, such as any of devices 100, 202 is shown in accordance with the present disclosure. The method 400 may be executed by a processor of a device, such as controller 114, configured to implement modules 204, 205, 206, 208, 210, 216, described above.

In step 402, accessibility event monitor 204 monitors accessibility API 210 for accessibility events 216 generated by the accessibility services of an operating system of a device, such as device 202. As stated above, in some embodiments, accessibility event monitor 204 may be configured to monitor only certain accessibility events. In step 404, accessibility event monitor 204 detects at least one accessibility event 216 indicating a use of at least one application 206. It is to be appreciated that the at least one accessibility event may be detected by at least the methods described above in relation to FIGS. 2 and 3. In step 406, user profile module 208 develops a profile for a user based on the detected at least one accessibility event 216. As stated above, the user profile developed by the user profile module 208 includes information associated to the use of one or more applications 206 by a user on a device 202. In step 408, the information in the user's profile is used to determine at least one characteristic of a user's behavior with respect to the user's use of the applications 206 on a device 202. As stated above, the at least one characteristic of the user's behavior may be determined by user profile module 208 by post-processing the information in the developed user profile. In step 410, user profile module 208 or another processing device of a device 202 performs at least one action based on the determined at least one characteristic.

In one aspect of the present disclosure, a method is provided including monitoring an accessibility API; detecting at least one accessibility event indicating a use of at least one application; and developing a profile for a user based on the detected at least one accessibility event.

In another aspect of the method, the detecting further includes detecting at least one state transition associated with a change from a first state of a user interface of a device to a second state of the user interface of the device.

In another aspect of the method, the first state and the second state include at least one of an idle state, an application start state, an application stop state, and/or a current application stop/new application start state.

In another aspect of the method, the method further includes determining at least one characteristic of a user's behavior based on the developed profile.

In another aspect of the method, the method further includes performing at least one action based on the determined at least one characteristic of the user's behavior.

In another aspect of the method, the use of the at least one application is a launching or halting of the at least one application.

In another aspect of the method, the use of the at least one application is a launching of the at least one application directly from a second application.

In another aspect of the method, the method further includes determining a time associated with the launching or halting of the at least one application.

In another aspect of the method, the method further includes storing at least one system property at the time of the use of the at least one application in the developed profile.

In another aspect of the method, the method is performed on at least one of a smart phone, a smart television, a laptop, a desktop, a gateway, and a set-top box.

According to another aspect of the present disclosure, a device is provided including an accessibility event monitor, configured to monitor an accessibility API and detect at least one accessibility event indicating a use of at least one application; and a user profile module configured to develop a profile for a user based on the detected at least one accessibility event.

In another aspect, the accessibility event monitor of the device is configured to detect at least one state transition associated with a change from a first state of a user interface of the device to a second state of the user interface of the device.

In another aspect, the first state and the second state of the device include at least one of an idle state, an application start state, an application stop state, and/or a current application stop/new application start state.

In another aspect, the user profile module of the device is configured to determine at least one characteristic of a user's behavior based on the developed profile.

In another aspect, the user profile module of the device is configured to perform the at least one action based on the determined at least one characteristic of the user's behavior.

In another aspect, the use of the at least one application is a launching or halting of the at least one application.

In another aspect, the use of the at least one application is a launching of the at least one application directly from a second application.

In another aspect, the user profile module of the device is configured to determine a time associated with the launching or halting of the at least one application.

In another aspect, wherein the user profile module is configured to store at least one system property at the time of the use of the at least one application in the developed profile.

In another aspect, the device is at least one of a smart phone, a smart television, a laptop, a desktop, a gateway, and a set-top box.

It is to be appreciated that the usage of "and/or" in a list including two or more limitations or elements, as used herein, is intended to refer to all permutations and combinations of the listed two or more limitations. For example, "A, B, and/or C", is intended to include at least one of: A, B, C, AB, AC, BC, or ABC, and if order is important in a particular context, also BA, CA, CB, CBA, BCA, ACB, BAC, or CAB.

It is to be appreciated that the various features shown and described are interchangeable, that is a feature shown in one embodiment may be incorporated into another embodiment.

Although embodiments which incorporate the teachings of the present disclosure have been shown and described in detail herein, those skilled in the art can readily devise many other varied embodiments that still incorporate these teachings. Having described embodiments of devices, systems and methods for detecting a usage of at least one application on a computing device, it is noted that modifications and variations can be made by persons skilled in the art in light of the above teachings. It is therefore to be understood that changes may be made in the particular embodiments of the disclosure disclosed which are within the scope of the disclosure as outlined by the appended claims.

## Claims

1. A method (400) comprising:
monitoring (402) an accessibility application programming interface (API);
detecting (404) at least one accessibility event indicating a use of at least one application; and
developing (406) a profile for a user based on the detected at least one accessibility event.

2. A device (100, 202) comprising:
an accessibility event monitor (204) configured to monitor an accessibility application programming interface (API) (210) and detect at least one accessibility event (216) indicating a use of at least one application (206); and
a user profile module (208) configured to develop a profile for a user based on the detected at least one accessibility event (216).

3. The method (400) of claim 1, wherein the detecting (404) further includes detecting at least one state transition, or the device (100, 202) of claim 2 wherein the accessibility monitor (204) is configured to detect the at least one state transition, and wherein the at least one state transition is associated with a change from a first state of a user interface to a second state of the user interface.

4. The method (400) or the device (100, 202) of claim 3, wherein the first state and the second state include at least one of an idle state (302), an application start state (304), an application stop state (308), and/or a current application stop/new application start state (306).

5. The method (400) of any of claims 1, 3 or 4, further comprising determining (408) at least one characteristic of a user's behavior based on the developed profile.

6. The method (400) of claim 5, further comprising performing (410) at least one action based on the determined at least one characteristic of the user's behavior.

7. The device (100, 202) of any of claims 2-4, wherein the user profile module (208) is configured to determine at least one characteristic of a user's behavior based on the developed profile.

8. The device (100, 202) of claim 7, wherein the user profile module (208) is configured to perform the at least one action based on the determined at least one characteristic of the user's behavior.

9. The method (400) of any of claims 1 or 3-6 or the device (100, 202) of any of claims 2-4, 7 or 8, wherein the use of the at least one application (206) comprises a launching or halting of the at least one application.

10. The method (400) or the device (100, 202) of claim 9, wherein the use of the at least one application comprises a launching of the at least one application directly from a second application.

11. The method (400) according to claim 9 or 10, further comprising determining a time associated with the launching or halting of the at least one application.

12. The method (400) according to any of claims 1, 3-6 or 9-11, further comprising storing at least one system property at the time of the use of the at least one application in the developed profile.

13. The device (100, 202) of claim 9 or 10, wherein the user profile module (208) is configured to determine a time associated with the launching or halting of the at least one application (206).

14. The device (100, 202) of any of claims 2-4, 7-10 or 13, wherein the user profile module (208) is configured to store at least one system property at the time of the use of the at least one application (206) in the developed profile.

15. The device (100, 202) or the method (400) of any of the preceding claims, wherein the device (100, 202) is, or the method (400) is performed on, at least one of a smart phone, a smart television, a laptop, a desktop, a gateway, and a set-top box.
